# EUROPEAN PATENT SPECIFICATION

(11) **EP 2 651 645 B1**
(45) Date of publication and mention of the grant of the patent: **24.05.2017**
(21) Application number: 11819107.1
(22) Date of filing: 16.12.2011
(51) Int. Cl.: B32B 37/14, D04H 1/74, D04H 3/005, D04H 1/4326

(54) **PRODUCT AND METHOD OF PRODUCING A SHAPE-RETAINING NONWOVEN MATERIAL**
PRODUKT UND VERFAHREN ZUR HERSTELLUNG EINES FORMBESTÄNDIGEN VLIESSTOFFES
PRODUIT ET PROCÉDÉ DE PRODUCTION D'UN MATÉRIAU NON TISSÉ CONSERVANT SA FORME

(30) Priority: 17.12.2010 US 201061424475 P
(43) Date of publication of application: 23.10.2013
(73) Proprietor: Tamicare Ltd., Radcliffe, Manchester M25 3SW (GB)
(72) Inventor: GILOH, Ehud, Radcliffe Manchester M26 3SW (GB); GILOH, Tamar, Radcliffe Manchester M26 3SW (GB)
(74) Representative: Tomkins & Co
(86) International application number: PCT/IB2011/003326
(87) International publication number: WO 2012/080848

(56) References cited:
- EP-A1- 1 054 092
- EP-A2- 2 027 841
- JP-A- 11 291 372

## Description

### Background

Thermoplastic nonwoven fabrics are widely used in many industries, including the hygiene field, for production of personal care products like baby diapers and pull-ups, feminine hygiene pads, and incontinence products. One of the disadvantages of thermoplastic nonwoven sheets is their relatively poor stretchability, and more particularly their poor resiliency. This is a disadvantage in many applications including diapers, protective undergarments, and related components.

High stretchabilty features improve products' body hugging ability, thus improving the look, feel, and performance of products. Forming a significantly stretchable and significantly shape-retaining (recovery feature) nonwoven film, that includes stretchable thermoplastic fibers, is desirable, but difficult to achieve. EP 1 054 092 describes a composite sheet with a non-woven fabric and a rubber elastic material bonded thereto. EP 2 027 841 describes forming an elastic material, for diapers and nappies, that has at least one and preferably three strands sprayed or poured on to the nonwoven material in a serpentine layout, bonded by heat, with the strands bonded together at discrete points.

The material and technologies developed and owned by TamiCare Ltd. (for example, U.S. Pat. Nos. 6,987,210, 7,354,424, and 7,767,133 and U.S. Pat. Pub. No. 2008/0292788) provide a soft and fabric-like shape-retaining nonwoven structure. However, an alternative nonwoven sheet made of thermoplastic materials, for the converting industry, would be highly desirable where different qualities and lower costs are needed.

### Summary

A hybrid, shape-retaining nonwoven structure of at least two layers including at least a first functional layer and a second functional layer is provided. The first functional layer comprises an expandable nonwoven sheet having an expansion character allowing for elongation in at least one direction. The second functional layer comprises a shape-retaining material. The first functional layer and second functional layer are associated with each other. The first functional layer is formed by a thermoplastic fiber layout that is in a spiral pattern, a sine wave pattern or a combination thereof.

In one aspect of the hybrid, shape-retaining nonwoven structure, the expandable nonwoven sheet comprises synthetic and thermoplastic fibers in a specific orientation or pattern, such that a stretching force applied to the first functional layer causes elongation of the first functional layer in at least one direction.

In another aspect of the hybrid, shape-retaining nonwoven structure, the first functional layer includes cuts, openings, or slits, such that a stretching force applied to the first functional layer causes elongation of the first functional layer in at least one direction.

In another aspect of the hybrid, shape-retaining nonwoven structure, the shape-retaining material comprises an elastomer or polymer, the elastomer or polymer being synthetic or natural, or a combination of several polymers.

In another aspect of the hybrid, shape-retaining nonwoven structure, the first functional layer can be expanded by at least 10%, or at least 25%, or at least 50%, or at least 100%, or at least 150%, or at least 200%, or at least more than 200%.

In another aspect of the hybrid, shape-retaining nonwoven structure, a third functional layer is included and which comprises an expandable nonwoven sheet having an expansion character allowing for elongation in at least one direction, wherein the second functional layer is located between the first functional layer and the third functional layer.

In yet another aspect of the hybrid, shape-retaining nonwoven structure, the expandable nonwoven sheet further comprises textile fibers.

A method to produce a hybrid shape-retaining nonwoven structure is also disclosed. The method includes providing a first functional layer comprising an expandable nonwoven sheet having an expansion character allowing for elongation in at least one direction and associating a second functional layer comprising a shape-retaining material with at least a portion of the first functional layer. The first functional layer is formed by a thermoplastic fiber layout that is in a spiral pattern, a sine wave pattern or a combination thereof.

In one aspect of the method, the associating includes embedding a resilient elastomer onto the first functional layer.

In another aspect of the method, the expandable nonwoven sheet comprises synthetic and thermoplastic fibers in a specific orientation or pattern, such that a stretching force applied to the first functional layer causes elongation of the first functional layer in at least one direction.

In another aspect of the method, the first functional layer includes cuts, openings, or slots, such that a stretching force applied to the first functional layer causes elongation of the first functional layer in at least one direction.

In another aspect of the method, the shape-retaining material comprises an elastomer or polymer, the elastomer or polymer being synthetic or natural, or a combination of several polymers.

In another aspect of the method, the first functional layer can be expanded by at least 10%, or at least 25%, or at least 50%, or at least 100%, or at least 150%, or at least 200%, or at least more than 200%.

In another aspect of the method, a third functional layer is included and which comprises an expandable nonwoven sheet having an expansion character allowing for elongation in at least one direction, wherein the second functional layer is located between the first functional layer and the third functional layer.

In yet another aspect of the method, the expandable nonwoven sheet further comprises textile fibers.

These and other embodiments and aspects are described below.

### Brief Description of the Figures

Fig. 1 shows a nonwoven structure of at least two layers in a rest position.
Fig. 2 shows the nonwoven structure shown in Fig. 1 in a stretched position.
Fig. 3 is a schematic graphical presentation of a nonwoven structure of the invention wherein at least two layers wherein the fibers are oriented in a sinus wave geometrical pattern in the rest position.
Fig. 4 is a schematic graphical presentation of the nonwoven structure shown in Fig. 3 in a stretched and expanded position in all directions.
Fig. 5 shows a nonwoven structure of at least two layers in the rest position.
Fig. 6 shows the nonwoven structure shown in Fig. 5 in the stretched position.
Fig. 7 shows a schematic close-up of two fibers laid substantially in a parallel direction, having two connection points along the laid direction.
Fig. 8 shows a schematic graphical presentation of a nonwoven structure with cuts in a relaxation position.
Fig. 9 shows a schematic graphical presentation of the nonwoven structure of Fig. 8 in a stretched position.

### Detailed Description

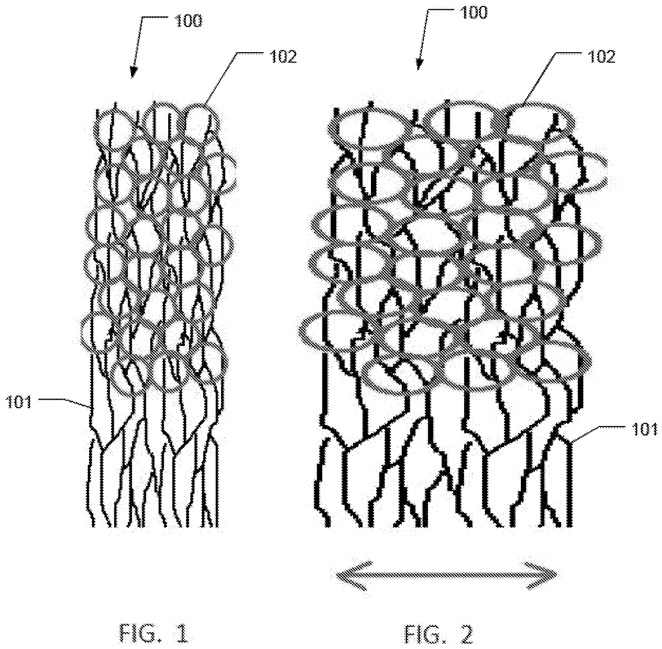

Referring to Fig. 1, the hybrid, shape-retaining nonwoven structure or sheet 100 includes at least two functional layers 101 and 102 combined in various ways, so as to provide versatile and resilient hybrid nonwoven sheets or structures. The sheet 100 can be stretched at least in one direction, usually a cross direction (CD) or machine direction (MD) of the converting machine, or in both MD and CD directions, or in any desired direction.

The term "machine direction" as applied to a nonwoven sheet, refers to the direction of travel of a machine conveyor. The term "cross direction" for a nonwoven sheet refers to the direction perpendicular to the machine direction.

The first functional layer 101 of the hybrid nonwoven structure may be an expandable nonwoven sheet made by using nonwoven technologies known in the art, such as spun bond, spun melt, spun lace, spun blown, wet laid, dry laid, or any other technique or combination of technologies thereof, or by any suitable nonwoven technology.

The expandable nonwoven sheet 101 may comprise synthetic and thermoplastic fibers. The expandable nonwoven sheet is formed in such a way that enables the sheet to be extendible or expandable, or elongated. The term "expandable" or "extendible" is used herein to mean a material which upon application of a stretching force, can be extended in a particular direction, to a stretched dimension (e.g., width) which is at least 10%, or more preferably 25%, or more preferably 50%, or more preferably 100%, or more preferably 150%, or more preferably 200%, or more preferably more than 200% greater than an original, unstretched dimension. Any suitable synthetic or thermoplastic fiber may be used to prepare the non-woven layer or sheet. The second functional layer 102 of the nonwoven structure may be formed of a shape-retaining material allowing the recovery of the first layer, which may be made substantially of synthetic or natural elastomers or polymers such as latex, for example. The second functional layer may be formed out of individual droplets, interconnected droplets, a mixture of individual and interconnected droplets, film, perforated film, fibers, threads, flakes, any combination thereof or any other form that will result with the desired features as defined in the present application. The second layer may also include recycled particles of natural or synthetic elastomer in form of fibers, wires, flakes, bits, or combination thereof.

The second functional layer 102 may be embedded into or applied onto the first functional layer during the manufacturing process by spraying, injection, extrusion, lamination, coating, brushing, sewing, or by any other suitable method known in the art.

As a result of combining, merging, fusing or embedding the second functional layer with the first functional layer, a hybrid shape-retaining nonwoven sheet with high stretchablity and recovery features is created.

The two functional layers 101, 102 can be combined or associated in various ways such as one on top of the other, one inside the other, side by side without overlapping, side by side with overlapping, randomly mixed, in a matrix, according to a pattern, or in any combination thereof. The hybrid nonwoven shape-retaining sheet 100 can be connected to or attached to or embedded with other materials such as absorptive articles, other sheets, or any other desired article.

In one embodiment, the expansion or elongation of the shape-retaining nonwoven structure 100 is achieved by applying the thermoplastic fibers on a moving surface such as a rotating drum, calendar, mold, or a conveyor in a specific orientation or pattern, allowing more flexibility. One example of a possible thermoplastic fibers pattern is a basic parallel layout, as shown in Fig. 1, Fig. 2, and Fig. 7. In another embodiment within the scope of the claims, a possible thermoplastic fibers layout is a spiral pattern.

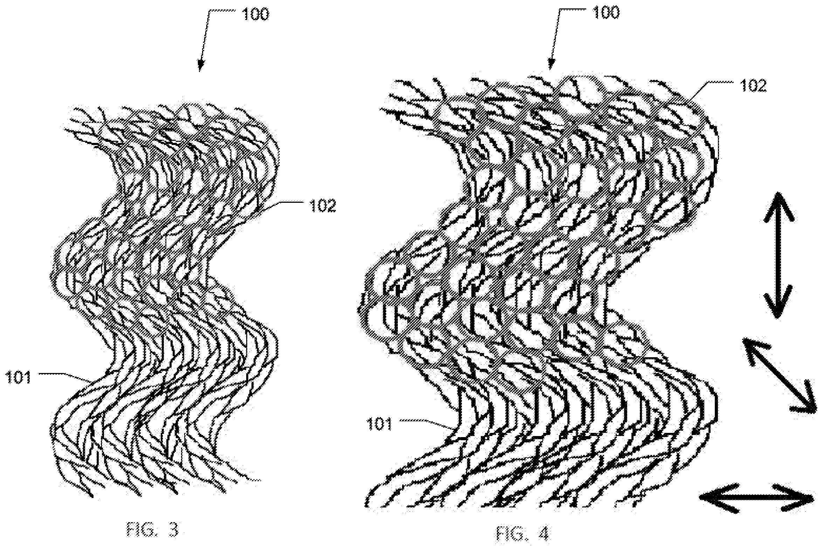

Yet another embodiment of a possible thermoplastic fibers layout within the scope of the claims is a sine wave pattern, as shown in Fig. 3 and Fig. 4. In Figs. 3 and 4, the second functional layer 102 may include droplets 102, which may be an elastomeric polymer. The arrows show the expansion directions of the nonwoven layout. A combination of some of the possible thermoplastic fibers layouts is also possible within the scope of the claims.

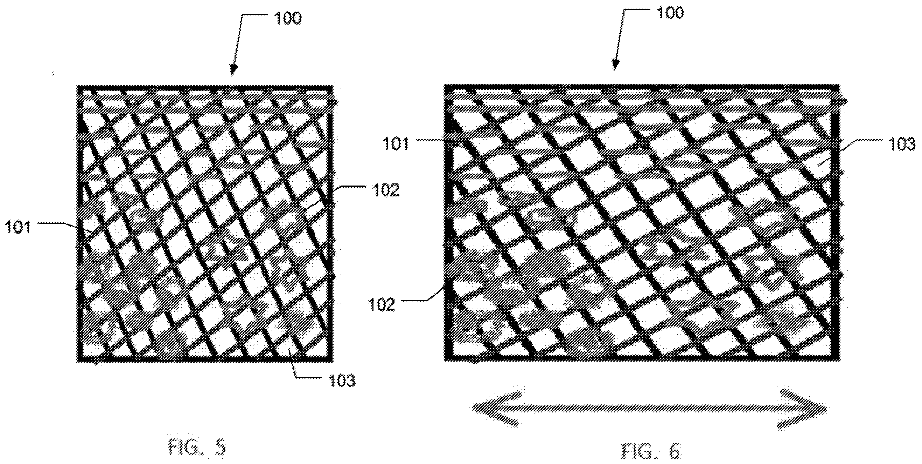

Figs. 5 and 6 show another embodiment of the nonwoven sheet 100 having two functional layers 101 and 102. The first functional layer 101 may comprise cuts, slits, or openings 103 that enable expansion as a result of a stretching force applied on the sheet.

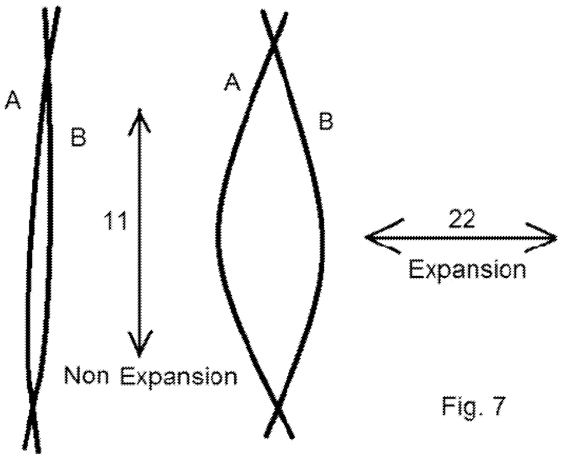

Fig. 7 shows two fibers, A and B, laid substantially in a parallel direction, having two connection points along the laid direction. Fig. 7 demonstrates a non-expansion nature along the laid direction 11 and an expansion quality at the perpendicular direction 22.

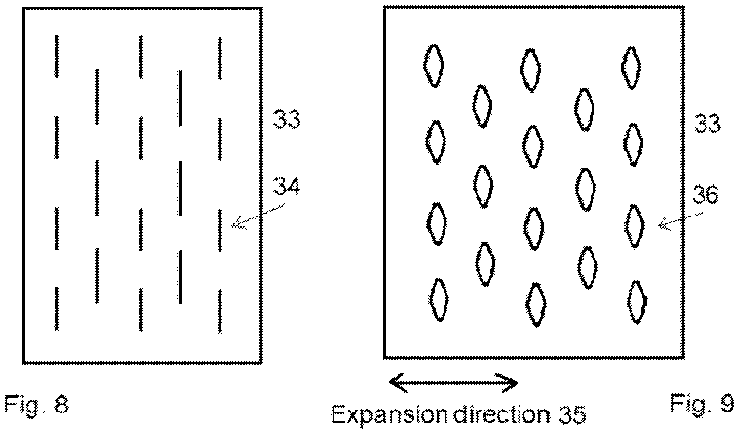

In yet another embodiment, expansion is achieved by creating a geometrical structure on a finished nonwoven sheet. For example, the geometrical structure may be created in the sheet by providing cuts, slits, or openings in the sheets. A stretching force applied to the sheet in a perpendicular direction to the cuts direction allows for expansion or elongation of the sheet, as shown in Fig. 8 and Fig. 9. Fig. 8 shows a nonwoven sheet 33 with cuts 34 in a relaxation position, and Fig. 9 shows the nonwoven sheet 33 with stretching forces applied to the sheet in the expansion direction 35 deforming the cuts 36 to allow expansion.

The two functional layers may be further combined with a third layer, such as an additional expandable nonwoven sheet and/or an additional elastomer layer. The two remote layers are expandable nonwoven layers, and the middle layer is a shape-retaining resilient functional layer. Such additional layers may be made of the same or different material or geometrical patterns.

The hybrid shape-retaining nonwoven sheet 100 of the present application may further comprise one external surface layer or two external surface layers made of textile fibers, such as loose cotton fibers, loose viscose fibers, paper fibers, bits or flakes, fur, cellulose based fibers, or any other fibers that are pleasant and comfortable when in contact with the skin. The textile fibers can be applied on the surface of the hybrid nonwoven shape retaining sheet by any suitable method such as flocking, pressing or any other suitable method known in the art.

The use of different combinations of different materials allows versatility of properties such as elasticity, resiliency, elongation, recovery, biodegradability, look, feel, and cost efficiency.

The hybrid, shape-retaining nonwoven sheet 100 may be prepared using existing machinery to create nonwoven fabrics with any suitable modifications including a fibers guidance system that defines the layout pattern of the fibers while laid on the moving surface (conveyor belt, dram etc.) of the machine, either by vacuum, comb-like manipulator, or any other suitable means, which forces the fiber to set on the moving surface in a controlled manner, so that the desired geometrical patterns are created. This is in contrast to current technologies where the fibers are randomly laid on the moving surface. In another example, online or offline apparatuses are appropriate for creating the cuts in the at least one nonwoven fabric sheet and applying the at least one elastomer layer. A resilient elastomer application system such as nozzles, brushes, laminators, needles, or other suitable means may be added.

## Claims

1. A hybrid, shape-retaining nonwoven structure (100) of at least two layers (101;102) comprising:
at least a first functional layer (101) and a second functional layer (102);
wherein the first functional layer (101) comprises an expandable nonwoven sheet having an expansion character allowing for elongation in at least one direction; and wherein the first functional layer is formed by a thermoplastic fiber layout that is in a spiral pattern, a sine wave pattern or a combination thereof;
wherein the second functional layer (102) comprises a shape-retaining material; and
wherein the first functional layer and second functional layer (102) are associated with each other.

2. The hybrid, shape-retaining nonwoven structure (100) according to claim 1, wherein the expandable nonwoven sheet comprises synthetic and thermoplastic fibers in a specific orientation or pattern, such that a stretching force applied to the first functional layer causes elongation of the first functional layer in at least one direction.

3. The hybrid, shape-retaining nonwoven structure (100) of any one of claims 1 to 2 wherein the first functional layer includes cuts, openings, or slits, such that a stretching force applied to the first functional layer causes elongation of the first functional layer in at least one direction.

4. The hybrid, shape-retaining nonwoven structure (100) according to any one of claims 1 to 3, wherein the shape-retaining material comprises an elastomer or polymer, the elastomer or polymer being synthetic or natural, or a combination of several polymers.

5. The hybrid, shape-retaining nonwoven structure (100) according to any one of claims 1 to 4, wherein the first functional layer can be expanded by at least 10%, or at least 25%, or at least 50%, or at least 100%, or at least 150%, or at least 200%, or at least more than 200%.

6. The hybrid, shape-retaining nonwoven structure (100) according to any one of claims 1 to 5, further comprising a third functional layer comprising an expandable nonwoven sheet having an expansion character allowing for elongation in at least one direction, wherein the second functional layer (102) is located between the first functional layer and the third functional layer.

7. The hybrid, shape-retaining nonwoven structure (100) according to any one of claims 1 to 6, wherein the expandable nonwoven sheet further comprises textile fibers.

8. A method for producing a hybrid, shape-retaining nonwoven structure (100) of at least two layers, the method comprising:
providing a first functional layer (101) comprising an expandable nonwoven sheet having an expansion character allowing for elongation in at least one direction so that the first functional layer is formed by a thermoplastic fiber layout that is in a spiral pattern, a sine wave pattern or a combination thereof; and
associating a second functional layer (102) comprising a shape-retaining material with at least a portion of the first functional layer.

9. The method according to claim 8, wherein the associating includes embedding a resilient elastomer onto the first functional layer.

10. The method according to any one of claims 8 or 9, wherein the expandable nonwoven sheet comprises synthetic and thermoplastic fibers in a specific orientation or pattern, such that a stretching force applied to the first functional layer (101) causes elongation of the first functional layer (101) in at least one direction.

11. The method according to any one of claims 8 or 9, wherein the first functional layer (101) includes cuts, openings, or slots, such that a stretching force applied to the first functional layer (101) causes elongation of the first functional layer (101) in at least one direction.

12. The method according to any one of claim 8 to 11, wherein the shape-retaining material comprises an elastomer or polymer, the elastomer or polymer being synthetic or natural, or a combination of several polymers.

13. The method according to any one of claims 8 to 12, wherein the first functional layer (101) can be expanded by at least 10%, or at least 25%, or at least 50%, or at least 100%, or at least 150%, or at least 200%, or at least more than 200%.

14. The method according to any one of claims 8 to 13, further comprising a third functional layer comprising an expandable nonwoven sheet having an expansion character allowing for elongation in at least one direction, wherein the second functional layer (102) is located between the first functional layer (101) and the third functional layer.

15. The method according to any one of claims 8 to 14, wherein the expandable nonwoven sheet further comprises textile fibers.

## Patentansprüche

1. Formstabile nicht gewebte Hybrid-Struktur (100) aus mindestens zwei Schichten (101; 102), die Folgendes aufweist:
zumindest eine erste funktionelle Schicht (101) und eine zweite funktionelle Schicht (102);
wobei die erste funktionelle Schicht (101) ein dehnbares nicht gewebtes Flächenelement mit einer Dehnungseigenschaft aufweist, die eine Ausdehnung in zumindest einer Richtung gestattet; und wobei die erste funktionelle Schicht durch eine thermoplastische Faseranordnung gebildet wird, die in einem Spiralmuster, einem Sinuswellenmuster oder einer Kombination davon ist;
wobei die zweite funktionelle Schicht (102) ein formstabiles Material aufweist; und
wobei die erste funktionelle Schicht und die zweite funktionelle Schicht (102) miteinander assoziiert sind.

2. Formstabile nicht gewebte Hybrid-Struktur (100) nach Anspruch 1, wobei das dehnbare nicht gewebte Flächenelement synthetische und thermoplastische Fasern in einer speziellen Orientierung oder in einem speziellen Muster aufweist, so dass eine Zugkraft, die auf die erste funktionelle Schicht aufgebracht wird, eine Ausdehnung der ersten funktionellen Schicht in mindestens einer Richtung bewirkt.

3. Formstabile nicht gewebte Hybrid-Struktur (100) nach einem der Ansprüche 1 bis 2, wobei die erste funktionelle Schicht Schnitte, Öffnungen oder Schlitze aufweist, so dass eine Zugkraft, die auf die erste funktionelle Schicht aufgebracht wird, eine Ausdehnung der ersten funktionellen Schichten in mindestens einer Richtung bewirkt.

4. Formstabile nicht gewebte Hybrid-Struktur (100) nach einem der Ansprüche 1 bis 3, wobei das formstabile Material ein Elastomer oder Polymer aufweist, wobei das Elastomer oder Polymer synthetisch oder natürlich oder eine Kombination aus mehreren Polymeren ist.

5. Formstabile nicht gewebte Hybrid-Struktur (100) nach einem der Ansprüche 1 bis 4, wobei die erste funktionelle Schicht um mindestens 10 % oder mindestens 25 % oder mindestens 50 % oder mindestens 100 % oder mindestens 150 % oder mindestens 200 % oder mindestens mehr als 200 % ausgedehnt werden kann.

6. Formstabile nicht gewebte Hybrid-Struktur (100) nach einem der Ansprüche 1 bis 5, die weiter eine dritte funktionelle Schicht aufweist, welche ein dehnbares nicht gewebtes Flächenelement mit einer Dehnungseigenschaft aufweist, die eine Ausdehnung in mindestens einer Richtung gestattet, wobei die zweite funktionelle Schicht (102) zwischen der ersten funktionellen Schicht und der dritten funktionellen Schicht angeordnet ist.

7. Formstabile nicht gewebte Hybrid-Struktur (100) nach einem der Ansprüche 1 bis 6, wobei das dehnbare nicht gewebte Flächenelement weiter Textilfasern aufweist.

8. Verfahren zum Herstellen einer formstabilen nicht gewebten Hybrid-Struktur (100) mit mindestens zwei Schichten, wobei das Verfahren Folgendes aufweist:
Vorsehen einer ersten funktionellen Schicht (101), die ein dehnbares nicht gewebtes Flächenelement mit einer Dehnungseigenschaft aufweist, welche eine Ausdehnung in mindestens einer Richtung gestattet, so dass die erste funktionelle Schicht durch eine Anordnung aus thermoplastischen Fasern geformt wird, die in einem Spiralmuster, einem Sinuswellenmuster oder einer Kombination davon ist; und
Assoziieren einer zweiten funktionellen Schicht (102), die ein formstabiles Material aufweist, mit mindestens einem Teil der ersten funktionellen Schicht.

9. Verfahren nach Anspruch 8, wobei das Assoziieren aufweist, ein elastisches Elastomer auf der ersten funktionellen Schicht einzubetten.

10. Verfahren nach einem der Ansprüche 8 oder 9, wobei das dehnbare nicht gewebte Flächenelement synthetische und thermoplastische Fasern in einer speziellen Orientierung oder einem speziellen Muster aufweist, so dass eine Zugkraft, die auf die erste funktionelle Schicht (101) aufgebracht wird, eine Ausdehnung der ersten funktionellen Schicht (101) in mindestens einer Richtung bewirkt.

11. Verfahren nach einem der Ansprüche 8 oder 9, wobei die erste funktionelle Schicht (101) Schnitte, Öffnungen oder Schlitze aufweist, so dass eine Zugkraft, die auf die erste funktionelle Schicht (101) aufgebracht wird, eine Dehnung der ersten funktionellen Schicht (101) in mindestens einer Richtung bewirkt.

12. Verfahren nach einem der Ansprüche 8 bis 11, wobei das formstabile Material ein Elastomer oder Polymer aufweist, wobei das Elastomer oder Polymer synthetisch oder natürlich oder eine Kombination aus mehreren Polymeren ist.

13. Verfahren nach einem der Ansprüche 8 bis 12, wobei die erste funktionelle Schicht (101) um mindestens 10 % oder mindestens 25 % oder mindestens 50 % oder mindestens 100 % oder mindestens 150 % oder mindestens 200 % oder mindestens mehr als 200 % gedehnt werden kann.

14. Verfahren nach einem der Ansprüche 8 bis 13, welches weiter aufweist, eine dritte funktionelle Schicht vorzusehen, die ein dehnbares nicht gewebtes Flächenelement mit einer Dehnungseigenschaft aufweist, welche eine Ausdehnung in mindestens einer Richtung gestattet, wobei die zweite funktionelle Schicht (102) zwischen der ersten funktionellen Schicht (101) und dritten funktionellen Schicht angeordnet ist.

15. Verfahren nach einem der Ansprüche 8 bis 14, wobei das dehnbare nicht gewebte Flächenelement weiter Textilfasern aufweist.

## Revendications

1. Structure hybride non tissée à conservation de forme (100) d'au moins deux couches (101 ; 102), comprenant :
au moins une première couche fonctionnelle (101) et une deuxième couche fonctionnelle (102) ;
dans laquelle la première couche fonctionnelle (101) comprend une feuille non tissée extensible ayant une caractéristique d'expansion permettant un allongement dans au moins une direction ; et dans laquelle la première couche fonctionnelle est constituée d'un agencement de fibres thermoplastiques selon un motif en spirale, un motif en onde sinusoïdale ou une combinaison de cela ;
dans laquelle la deuxième couche fonctionnelle (102) comprend un matériau à conservation de forme ; et
dans laquelle la première couche fonctionnelle et la deuxième couche fonctionnelle (102) sont associées entre elles.

2. Structure hybride non tissée à conservation de forme (100) selon la revendication 1, dans laquelle la feuille non tissée extensible comprend des fibres synthétiques et thermoplastiques dans une orientation ou un motif spécifique, de sorte qu'une force d'étirement appliquée à la première couche fonctionnelle provoque un allongement de la première couche fonctionnelle dans au moins une direction.

3. Structure hybride non tissée à conservation de forme (100) selon l'une quelconque des revendications 1 ou 2, dans laquelle la première couche fonctionnelle comprend des découpes, des ouvertures ou des fentes, de sorte qu'une force d'étirement appliquée à la première couche fonctionnelle provoque un allongement de la première couche fonctionnelle dans au moins une direction.

4. Structure hybride non tissée à conservation de forme (100) selon l'une quelconque des revendications 1 à 3, dans laquelle le matériau à conservation de forme comprend un élastomère ou un polymère, l'élastomère ou le polymère étant synthétique ou naturel, ou une combinaison de plusieurs polymères.

5. Structure hybride non tissée à conservation de forme (100) selon l'une quelconque des revendications 1 à 4, dans laquelle la première couche fonctionnelle peut être expansée d'au moins 10 %, ou d'au moins 25 %, ou d'au moins 50 %, ou d'au moins 100 %, ou d'au moins 150 %, ou d'au moins 200 %, ou d'au moins plus de 200 %.

6. Structure hybride non tissée à conservation de forme (100) selon l'une quelconque des revendications 1 à 5, comprenant en outre une troisième couche fonctionnelle comprenant une feuille non tissée extensible ayant une caractéristique d'expansion permettant un allongement dans au moins une direction, la deuxième couche fonctionnelle (102) étant située entre la première couche fonctionnelle et la troisième couche fonctionnelle.

7. Structure hybride non tissée à conservation de forme (100) selon l'une quelconque des revendications 1 à 6, dans laquelle la feuille non tissée extensible comprend en outre des fibres textiles.

8. Procédé de fabrication d'une structure hybride non tissée à conservation de forme (100) d'au moins deux couches, le procédé comprenant :
prévoir une première couche fonctionnelle (101) comprenant une feuille non tissée extensible ayant une caractéristique d'expansion permettant un allongement dans au moins une direction de telle sorte que la première couche fonctionnelle soit formée par un agencement de fibres thermoplastiques selon un motif en spirale, un motif en onde sinusoïdale ou une combinaison de cela ; et
associer une deuxième couche fonctionnelle (102) comprenant un matériau à conservation de forme à au moins une portion de la première couche fonctionnelle.

9. Procédé selon la revendication 8, dans lequel l'association comprend l'incorporation d'un élastomère élastique dans la première couche fonctionnelle.

10. Procédé selon l'une quelconque des revendications 8 ou 9, dans lequel la feuille non tissée extensible comprend des fibres synthétiques et thermoplastiques dans une orientation ou un motif spécifique, de sorte qu'une force d'étirement appliquée à la première couche fonctionnelle (101) provoque un allongement de la première couche fonctionnelle (101) dans au moins une direction.

11. Procédé selon l'une quelconque des revendications 8 ou 9, dans lequel la première couche fonctionnelle (101) comprend des découpes, des ouvertures ou des fentes, de sorte qu'une force d'étirement appliquée à la première couche fonctionnelle (101) provoque un allongement de la première couche fonctionnelle (101) dans au moins une direction.

12. Procédé selon l'une quelconque des revendications 8 à 11, dans lequel le matériau à conservation de forme comprend un élastomère ou un polymère, l'élastomère ou le polymère étant synthétique ou naturel, ou une combinaison de plusieurs polymères.

13. Procédé selon l'une quelconque des revendications 8 à 12, dans lequel la première couche fonctionnelle (101) peut être expansée d'au moins 10 %, ou d'au moins 25 %, ou d'au moins 50 %, ou d'au moins 100 %, ou d'au moins 150 %, ou d'au moins 200 %, ou d'au moins plus de 200 %.

14. Procédé selon l'une quelconque des revendications 8 à 13, comprenant en outre une troisième couche fonctionnelle comprenant une feuille non tissée extensible ayant une caractéristique d'expansion permettant un allongement dans au moins une direction, la deuxième couche fonctionnelle (102) étant située entre la première couche fonctionnelle (101) et la troisième couche fonctionnelle.

15. Procédé selon l'une quelconque des revendications 8 à 14, dans lequel la feuille non tissée extensible comprend en outre des fibres textiles.
